# EUROPÄISCHE PATENTANMELDUNG

(11) **EP 3 799 363 A2**
(43) Veröffentlichungstag der Anmeldung: **31.03.2021**
(21) Anmeldenummer: 20194497.2
(22) Anmeldetag: 04.09.2020
(51) Int. Cl.: H04L 12/28

(54) **VERFAHREN ZUM BETREIBEN VON SENSOREN**

(30) Priorität: 05.09.2019 DE 102019213519
(71) Anmelder: Robert Bosch GmbH, 70442 Stuttgart (DE)
(72) Erfinder: Schenke, Patric, 71067 Sindelfingen (DE); Haeussermann, Kai, 73630 Remshalden (DE)

(57) **Zusammenfassung**

Die Erfindung betrifft ein Verfahren (100) zum Betreiben von mindestens zwei Sensoren (20, 20a, 20b, 20c, 30, 30a, 50), die Teil eines Smart-Home-Systems (10) sind, aufweisend die Schritte:
• Versetzen (110) des ersten Sensors (20, 20a, 20b, 20c) in einen Schlafmod us,
• Erfassen (120) einer Umgebungsgröße, welche die Umgebung repräsentiert, durch einen zweiten Sensor (30, 30a, 50),
• Aufwecken (140) des ersten Sensors (20, 20a, 20b, 20c) aus dem Schlafmodus in Abhängigkeit von der durch den zweiten Sensor (30, 30a, 50), erfassten Umgebungsgröße und Erfassen einer Umgebungsgröße, welche die Umgebung repräsentiert, durch den ersten Sensor (20, 20a, 20b, 20c),
• Auswerten (130, 155, 160) zumindest einer der erfassten Umgebungsgrößen.

## Beschreibung

Die vorliegende Erfindung betrifft ein Verfahren zum Betreiben von mindestens zwei Sensoren, die Teil eines Smart-Home-Systems sind.

### Stand der Technik

In den meisten nachrüstbaren Smart-Home-Systemen kommen funkbasierte Geräte zum Einsatz, die über einen Energiespeicher mit Energie versorgt werden.

Das Erfassen und das Senden der Umgebungsgrößen, welche die Umgebung repräsentieren, kostet Energie und verkürzt die Laufzeit. Zudem kommt hinzu, dass auf bestimmten freien ISM-Frequenzbändern ein sogenannter Duty-Cycle eingehalten werden muss, der den Geräten erlaubt, nur eine bestimmte % pro Stunde an Daten zu senden.

Es gibt verschiedene Ansätze den Energieverbrauch zu senken. Üblicherweise werden die Sensoren über eine vorher fest definierte Zeit in einen Schlafmodus versetzt, und nur alle x Sekunden/Minuten/Stunden aufgeweckt um die Umgebung zu erfassen und ggf. die Messdaten zu versenden.

### Offenbarung der Erfindung

Die vorliegende Erfindung betrifft ein Verfahren zum Betreiben von mindestens zwei Sensoren. Die Sensoren sind Teil eines Smart-Home-Systems. Das Verfahren umfasst die folgenden Verfahrensschritte:
In einem Verfahrensschritt wird ein erster Sensor in einen Schlafmodus versetzt.

In einem weiteren Verfahrensschritt erfolgt das Erfassen einer Umgebungsgröße durch einen zweiten Sensor. Die erfasste Umgebungsgröße repräsentiert die Umgebung des zweiten Sensors, der sie erfasst.

In einem Verfahrensschritt erfolgt das Aufwecken des ersten Sensors aus dem Schlafmodus. Das Aufwecken wird in Abhängigkeit von der durch den zweiten Sensor erfassten Umgebungsgröße durchgeführt. Der aufgeweckte erste Sensor erfasst eine Umgebungsgröße. Die erfasste Umgebungsgröße repräsentiert die Umgebung um den ersten Sensor.

In einem Verfahrensschritt wird zumindest einer der erfassten Umgebungsgrößen ausgewertet. Vorzugsweise wird die Umgebungsgröße in einem zentralen Steuergerät des Smart-Home-Systems ausgewertet. In Abhängigkeit der Auswertung können insbesondere Steuersignale zum Steuern von Geräten des Smart-Home-Systems erzeugt werden.

Das erfindungsgemäße Verfahren hat den Vorteil, dass insbesondere Energie bei den Sensoren gespart werden kann. Somit lässt sich die Lebensdauer der batteriebetriebenen Geräte verlängern.

Durch die in den Unteransprüchen aufgeführten Maßnahmen ergeben sich vorteilhafte Weiterbildungen und Verbesserungen des im Hauptanspruch angegebenen Verfahrens.

Gemäß einer vorteilhaften Weiterbildung der Erfindung wird die Umgebung durch physikalische und/oder chemische Größen, wie insbesondere Temperatur, Luftfeuchtigkeit, Helligkeit, Schadstoffgehalt, Bewegung, Luftbewegung, Luftqualität, Strömungen repräsentiert, wobei insbesondere aus der Umgebungsgröße abgeleitet werden kann, dass zumindest ein Lebewesen anwesend oder abwesend ist.

Gemäß einer vorteilhaften Weiterbildung erfasst ein Sensor im Schlafmodus selten oder gar nicht eine Umgebungsgröße, welche die Umgebung repräsentiert und/oder überträgt selten oder gar nicht Nachrichten, insbesondere erfasste Umgebungsgröße oder ein aus mindestens einer erfassten Umgebungsgröße abgeleitetes Signal. Im Schlafmodus kann die Energie gesenkt werden und insbesondere die Vorgaben bezüglich Duty-Cycle erfüllt werden. Vorzugsweise lauscht der Sensor um Schlafmodus auf eingehende Nachrichten, welchen ein Steuersignal enthalten, die Ihn aufwecken sollen.

Gemäß einer vorteilhaften Weiterbildung der Erfindung erfasst der zweite Sensor in regelmäßigen Zeitabständen, insbesondere kontinuierlich, die Umgebungsgröße. Das Verfahren beschränkt sich vorteilhaft auf das Erfassen von Umgebungsgrößen durch einen Sensor, nämlich den zweiten Sensor. Die Wiederholungsrate sowie die Abstände zwischen dem Erfassen hängt von der erfassten Umgebungsvariable ab. Es kann zusätzlich der Energiebedarf des Sensors verringert werden.

Eine vorteilhafte Weiterbildung ist dadurch gegeben, dass die durch den ersten Sensor und/oder zweiten Sensor erfasste Umgebungsgröße erst bei einer Abweichung größer eines relativen Schwellenwerts übertragen wird. Es können vorteilhaft minimale Änderungen oder Änderungen die unterhalb eines definierten Bereichs liegen, ignoriert werden. Der Sensor sendet insbesondere nur dann Nachrichten, insbesondere Umgebungsgrößen, wenn diese beispielsweise sich gegenüber einem zuvor gemessenen oder ermittelten oder einem Referenzwert, wesentlich ändern. Es wird der Energiebedarf gesenkt, in dem verhindert wird, dass wenig relevante Nachrichten gesendet werden.

Eine vorteilhafte Weiterbildung ist dadurch gegeben, dass die durch den ersten Sensor und/oder zweiten Sensor erfasste Umgebungsgröße beim Überschreiten eines absoluten Schwellenwerts übertragen werden. Es können Änderungen die unterhalb eines Schwellenwerts liegen, ignoriert werden. Es wird der Energiebedarf gesenkt.

Eine vorteilhafte Weiterbildung ist dadurch gegeben, dass die durch den ersten Sensor und/oder zweiten Sensor erfasste Umgebungsgröße beim Erreichen eines Bereichs übertragen wird. Es werden Umgebungsgrößen, welche außerhalb des Bereichs liegen ignoriert. Es wird vorteilhaft der Energiebedarf gesenkt.

Eine vorteilhafte Weiterbildung ist dadurch gegeben, dass die durch den ersten Sensor und/oder zweiten Sensor erfasste Umgebungsgröße beim Erreichen eines untypischen Bereichs (Anomalie, Peaks, sprunghafte Änderungen im Vergleich zur vorherigen Messung) die erfasste Umgebungsgröße des jeweils anderen Sensors zur Validierung nutzen kann, insbesondere nutzt. Es werden vorteilhaft Falschmessungen minimiert.

Eine Weiterbildung des Verfahrens zeichnet sich dadurch aus, dass mehr als ein erster Sensor ausgebildet ist, insbesondere zwei, vorzugsweise mehrere erste Sensoren, ausgebildet sind. Vorteilhaft werden alle ersten Sensoren, insbesondere alle ersten Sensoren an einem Ort oder in einem Bereich oder in einem Raum oder in einem Gebäudeteil oder in einem Gebäude, in einen Schlafmodus versetzt. Weiterhin erfolgt eine Auswahl eines ersten Sensors und aufwecken des ausgewählten ersten Sensors in Abhängigkeit von der durch den zweiten Sensor erfassten Umgebungsgröße.

Eine Weiterbildung des Verfahrens zeichnet sich dadurch aus, dass mehr als ein erster Sensor ausgebildet ist. Vorteilhaft werden alle ersten Sensoren in einen Schlafmodus versetzt. Die Auswahl eines ersten Sensors, und das Aufwecken des ausgewählten ersten Sensors, erfolgt in Abhängigkeit von der Position des ersten Sensors und des zweiten Sensors. Gemäß einer Weiterbildung wird ein erster Sensor ausgewählt, insbesondere der am nächsten, vorzugsweise bezogen auf die örtliche Nähe, an dem zweiten Sensor angeordnet ist oder der am gleichen Ort oder im gleichen Bereich oder im gleichen Raum oder im gleichen Gebäudeteil oder im gleichen Gebäude wie der zweite Sensor angeordnet ist. Es werden vorteilhaft die erfassten Umgebungsgrößen überprüft.

Eine Weiterbildung des Verfahrens zeichnet sich dadurch aus, dass der erste Sensor in den Schlafmodus versetzt wird, wenn er die erfasste Umgebungsgröße und/oder ein davon abgeleitetes Signal übertragen hat. Es wird vorteilhaft Energie gespart.

Eine Weiterbildung des Verfahrens zeichnet sich dadurch aus, dass das Erfassen der Umgebungsgröße durch den zweiten Sensor in Abhängigkeit von definierten Profilen, insbesondere Nutzungsprofilen und/oder der Anwesenheit eines Bewohners erfolgt. Es lässt sich Energie sparen da auch der zweite Sensor nur bei Bedarf Umgebungsgrößen erfasst.

Eine Weiterbildung des Verfahrens zeichnet sich dadurch aus, dass das Bestimmen des Zeitpunkts, an welchem der zweite Sensor eine Umgebungsgröße erfasst, in Abhängigkeit von Zeitpunkten in der Vergangenheit, an welchen der zweite Sensor bisher die Umgebungsgröße erfasst hat und/oder ein Abruf der Umgebungsgröße durchgeführt wurde. Das Verfahren lernt aus der Vergangenheit.

Im Folgenden soll die Erfindung anhand der Zeichnungen näher erläutert werden, wobei gleiche beziehungsweise entsprechende Elemente mit den gleichen Bezugszeichen versehen sind. Es zeigen:
- Figur 1: einen beispielhaften Aufbau und
- Figur 2: den Verfahrensablauf des erfindungsgemäßen Verfahrens.

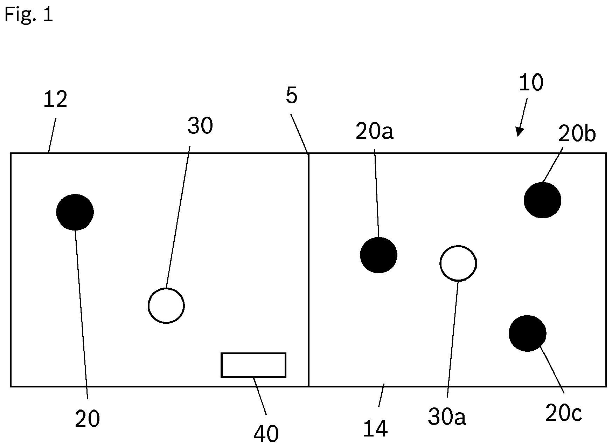

In Figur 1 ist beispielhaft ein Gebäude 5 dargestellt. Das Gebäude 5 weist einen ersten Raum 12 sowie einen zweiten Raum 14 auf. In dem ersten Raum 12 sind beispielhaft Sensoren 20, 30 angeordnet. In dem zweiten Raum 14 sind beispielhaft Sensoren 20a, 20b, 20c, 30a angeordnet.

Ein Sensor 20, 20a, 20b, 20c, 30, 30a auch als Detektor, Messgrößen- oder Mess-Aufnehmer oder -Fühler bezeichnet, ist ausgebildet und/oder eingerichtet, Umgebungsgrößen zu erfassen, welche die Umgebung repräsentieren. Sensoren 20, 20a, 20b, 20c, 30, 30a können insbesondere physikalische, und/oder chemische Eigenschaften erfassen. Physikalische Größen sind beispielsweise Wärmemenge, Temperatur, Feuchtigkeit, Druck, Schallfeldgrößen, Helligkeit, Beschleunigung und chemische Größen wie beispielsweise pH-Wert, lonenstärke oder elektrochemisches Potential. Ferner können Sensoren 20, 20a, 20b, 20c, 30, 30a die stoffliche Beschaffenheit seiner Umgebung qualitativ oder als Messgröße quantitativ erfassen. Diese Umgebungsgrößen werden mittels physikalischer oder chemischer Effekte erfasst und in ein weiterverarbeitbares elektrisches Signal umgeformt und derart aufbereitet, dass mittels einer Kommunikationsverbindung übertragen werden können.

Es ist beispielhaft ein erster Sensor 20 sowie ein zweiter Sensor 30 innerhalb des ersten Raums 12 angeordnet. Die Sensoren 20, 30 sind Teil eines Smart-Home-Systems 10.

Unter einem "Smart-Home" sind allgemein Vorrichtungen und Systeme zu verstehen, die in einem Gebäude integriert und/oder angeordnet sind und dazu dienen die Wohn- und Lebensqualität zu erhöhen, oder auch der Erhöhung der Sicherheit dienen, mittels Geräten und Installationen im und am Gebäude, die zum Beispiel von der Ferne aus gesteuert werden können. Zum Beispiel können Geräte im Gebäude durch ein mobiles Eingabegerät, insbesondere einem Smartphone, Tablett oder Mobiltelefon aus der Ferne gesteuert werden.

Ferner können die Geräte untereinander kommunizieren und Nachrichten, insbesondere Informationen, Steuersignale und Umgebungsgrößen übertragen.

Unter Geräte sind beispielsweise Hausgeräte, Multimediageräte, Gartengeräte, Thermotechnikgeräte zu verstehen.

Unter einem Hausgerät sind beispielsweise Gerätetypen zu verstehen, welche in einem Haushalt aber auch im professionellen Bereich eingesetzt werden können, wie beispielsweise Spülmaschinen, Waschmaschinen, Trockner, Backofen, Mikrowelle, Dampfgarer, Kombidämpfer, Staubsauger, Bügeleisen, Dunstabzugshaube und weitere.

Unter Multimediageräte sind Geräte zu verstehen, welche der Unterhaltung dienen, insbesondere Fernseher, Lautsprecher, Audiosystem, Verstärker für Lautsprecher, Beamer, Smarte Speaker und weitere.

Unter Gartengeräte sind Rasenmäher, Robotermäher, Bewässerungsanlagen, Sprinkleranlagen, Bodenfeuchtesensoren, Lichtsensoren, PH-Sensoren und weitere zu verstehen.

Unter Thermotechnikgeräte sind Geräte zum Erwärmen, Kühlen, Belüften von Gebäuden zu verstehen, insbesondere Heizungsanlagen, Klimaanlagen oder Lüftungsanlagen, vorzugsweise Heizkessel, Solarheizung, Wärmepumpe, Wohnraumlüftung, Warmwasserspeicher, Heizkörper, Pumpen, Ventile, Regelungen und/oder Klimaanlagen.

Beispielhaft handelt es sich bei dem ersten Sensor 20 um einen Temperatursensor. Der Temperatursensor erfasst als Umgebungsgröße die Umgebungstemperatur, welche die Luft um den Temperatursensor aufweist. Die Umgebungsgröße des Temperatursensors repräsentiert die Temperatur der Umgebung, die Umgebungstemperatur.

Bei dem zweiten Sensor 30 handelt es sich um einen Bewegungssensor. Der Bewegungssensor erfasst Bewegungen und kann insbesondere anhand der Bewegung auf die Anwesenheit von Lebewesen, insbesondere Personen oder Tieren schließen.

Der Bewegungssensor erfasst als physikalische Größe Infrarotstrahlung, elektromagnetische Wellen oder Ultraschall. Die Umgebung wird bei einem Bewegungssensor mittels Erfassen von Bewegungen anhand Änderungen von Infrarotstrahlung , elektromagnetische Wellen oder Ultraschall erfasst. Die Umgebungsgröße spiegelt beispielsweise die Anwesenheit oder Abwesenheit von Lebewesen wieder.

Die Sensoren 20, 30 in dem Raum 12 können ausgebildet seine auch anderen Umgebungsgrößen alternativ oder zusätzlich zu erfassen, welche die Umgebung repräsentieren. Auch ist die Anzahl der Sensoren 20, 30, welche in einem Raum 12angeordnet sind nicht auf zwei beschränkt. Es können beliebig viele Sensoren angeordnet sein.

Vorzugsweise sind die Sensoren 20, 20a, 20b, 20c, 30, 30a mit einem Energiespeicher ausgerüstet, welcher für die Energieversorgung des Sensors 20, 20a, 20b, 20c, 30, 30a sorgt. Gemäß einer Weiterbildung der Erfindung können die Sensoren 20, 20a, 20b, 20c, 30, 30a auch mit Energiegeneratoren ausgebildet sein, die für eine Versorgung des Sensors 20, 20a, 20b, 20c, 30, 30a mit Energie sorgen. Bedingt durch die meist kleinen Ausmaße der Sensoren 20, 20a, 20b, 20c, 30, 30a sind die Energiequellen klein ausgeführt.

Ferner weisen die meisten Smart-Home-Systeme 10 ein zentrales Steuergerät 40, insbesondere ein Gateway auf. Das zentrale Steuergerät 40 ermöglicht eine Kommunikation zwischen den Geräten des Smart-Home-Systems. Somit ist auch eine Kommunikation zwischen den Sensoren 20, 20a, 20b, 20c, 30, 30a möglich. Unter einer Kommunikation zwischen den Sensoren 20, 20a, 20b, 20c, 30, 30a wird die direkte Kommunikation als auch eine Kommunikation mit dem zentralen Steuergerät 40 direkt oder über das zentrale Steuergerät 40 verstanden.

Die Kommunikation verläuft mittels einer Kommunikationsverbindung, drahtgebunden, insbesondere mittels eines Bussystems, Powerline, M-Bus, Ethernet, EIB, CAN, KNX, EMS, OpenTherm oder drahtlos, vorzugsweise Bluetooth, NFC, RFID, ANT+, Dash7, GPRS, UMTS, 5G, LTE, WIMAX, Zigbee, Z-Wave, 868 MHz oder WIFI oder optisch, insbesondere mittels pulsmodulierten Lichts.

Vorzugsweise umfasst ein Sensor 20, 20a, 20b, 20c, 30, 30a eine Kommunikationsschnittstelle, sowie eine Einheit zur Aufbereitung der Umgebungsgrößen, derart, dass diese mittels der Kommunikationsschnittstelle versendet werden können.

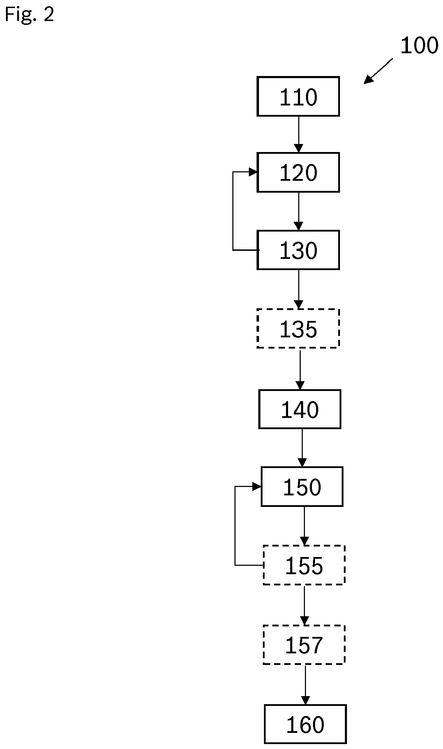

Am Beispiel eines Aufbaus gemäß dem ersten Raum 12 in der Figur 1 soll das Verfahren 100 in Figur 2 erläutert werden.

Das Verfahren 100 dient zum Betreiben von mindestens zwei, vorzugsweise mehrere, Sensoren 20, 30, die Teil eines Smart-Home-Systems 10 sind. Die Kommunikation in dem Smart-Home-System 10 erfolgt insbesondere drahtlos und oder drahtgebunden.

In einem Verfahrensschritt 110 wird der erste Sensor 20 in einen Schlafmodus versetzt.

In dem Schlafmodus erfasst der Sensor selten oder gar nicht eine Umgangsgröße. Vorzugsweise ist die Erfassung der Umgangsgröße deaktiviert. Alternativ oder zusätzlich überträgt der Sensor im Schlafmodus selten oder gar nicht Nachrichten, insbesondere erfasste Umgebungsgröße oder ein aus mindestens einer erfassten Umgebungsgröße abgeleitetes Signal.

Vorzugsweise hört der Sensor im Schlafmodus lediglich auf Kommunikation. Das bedeutet er empfängt nur Nachrichten. Enthält nun eine der Nachrichten einen Befehl zum Aufwachen, so wacht der Sensor aus dem Schlafmodus auf. Nach dem Aufwachen erfasst er beispielsweise die Umgebungsgröße und/oder überträgt Nachrichten.

Am Beispiel der Figur 1 handelt es sich bei dem ersten Sensor beispielsweise um einen Temperatursensor 20. Der Temperatursensor 20 erfasst im Schlafmodus keine Umgangsgröße, welche in diesem Fall die Temperatur der Umgebung repräsentiert. Es kann Energie eingespart werden.

In einem Verfahrensschritt 120 erfolgt das erfassen einer Umgebungsgröße durch einen zweiten Sensor 30. Am Beispiel der Figur 1 handelt es sich bei dem zweiten Sensor 30 um einen Bewegungssensor. Der zweite Sensor 30 erfasst somit die Bewegung und damit die Anwesenheit von Lebewesen innerhalb des Raums 12.

Das Erfassen 120 der Umgebungsgröße durch den zweiten Sensor 30 erfolgt abhängig von der erfassten Umgebungsgröße in regelmäßigen Zeitständen oder kontinuierlich. Bei einem Bewegungssensor erfolgt das erfassen beispielsweise kontinuierlich. Die Erfassung der Temperatur kann dagegen in regelmäßigen Zeitabständen erfolgen, da sich die Temperatur nur sehr träge ändert.

In einem optionalen Verfahrensschritt 130 erfolgt die Auswertung der durch den zweiten Sensor 30 erfassten Umgebungsgröße. Insbesondere wird im Fall einen Bewegungssensor ausgewertet, ob eine Bewegung besteht. Wird eine Bewegung erfasst, so kann erfasst werden, ob es sich um ein Lebewesen handelt. Ist ein Lebewesen erfasste, wird mit Verfahrensschritt 140 weiter verfahren. Ist dagegen kein Lebewesen anwesend wird Verfahrensschritt 120 wiederholt.

Ferner wird optional geprüft ob die erfasste Umgebungsgröße eine Abweichung Größe eines definierten Schwellwertes und oder ein Überschreiten eines absoluten Schwellenwerts und oder einen definierten Bereich erreicht. Erst wenn diese Bedingung erfüllt ist wird mit Verfahrensschritt 140 weiter verfahren. Andernfalls wird Verfahrensschritt 120 wiederholt.

In dem Verfahrensschritt 140 erfolgt das aufwecken des ersten Sensors 20 aus dem Schlafmodus. Das Aufwecken erfolgt in Abhängigkeit von der Umgebungsgröße, welche durch den zweiten Sensor 30 erfasst wurde. Am Beispiel der Figur 1 wird der erste Sensor 20 aufgeweckt, wenn durch den zweiten Sensor 30 eine Bewegung, insbesondere eine Anwesenheit von Lebewesen erfasst wird.

In dem Verfahrensschritt 150 beginnt der erste Sensor, nachdem er aufgeweckt wurde mit der Erfassung einer Umgebungsgröße, welche die Umgebung repräsentiert. Am Beispiel der Figur 1 erfasst der erste Sensor 20 die Temperatur der Umgebung, die Umgebungstemperatur.

In einem optionalen Verfahrensschritt 155 wird die Umgebungsgröße, welche von dem ersten Sensor 20 erfasst wird, ausgewertet. Unter Auswerten wird hierbei insbesondere verstanden, dass geprüft wird, ob eine, insbesondere relative oder absolute, Abweichung größer eines definierten Schwellwertes und/oder ein Überschreiten eines absoluten Schwellwertes und/oder ein Erreichen eines gewissen Bereichs erfolgt ist. Erst wenn die Auswertung erfolgt ist, wird die Umgebungsgröße als solche oder ein erzeugtes Signal zur Auswertung weitergeleitet. Es wird mit Verfahrensschritt 160 weiter verfahren, andernfalls wird der Verfahrensschritt 150 wiederholt.

In einem optionalen Verfahrensschritt 157 wird der erste Sensor 20 nachdem er eine Umgebungsgröße erfasst hat und diese Umgebungsgröße oder ein daraus erzeugtes Signal übertragen hat, zurück in den Schlafmodus versetzt.

In einem weiteren Verfahrensschritt 160 erfolgt das Auswerten von zumindest einem der erfassten Umgebungsgrößen. Insbesondere wird die von dem ersten Sensor erfasst Umgebungsgröße ausgewertet. Unter auswerten kann hierbei auch verstanden werden, dass die erfasste Umgebungsgröße an ein Gerät weitergeleitet wird und/oder ein Steuersignal erzeugt wird, welches wiederum an ein Gerät gesendet wird. Es erfolgt ein Ansteuern eines Geräts.

Ferner ist in Figur 1 der weitere Raum 14 dargestellt. In dem weiteren Raum 14 sind beispielhaft drei erste Sensoren 20a, 20b, 20c angeordnet. Auch ist ein zweiter Sensor 30a in dem Raum angeordnet. Die Sensoren kommunizieren ebenfalls mit und über die zentrale Steuereinheit 40.

Sind mehr als ein erster Sensor 20, 20a, 20b, 20c ausgebildet, unterscheidet sich das Verfahren 100 dahingehend, dass in dem Verfahrensschritt 110 nicht nur ein einzelner erster Sensor 20 in einem Schlafmodus versetzt wird, sondern mehrere insbesondere alle ersten Sensoren 20a, 20b, 20c in einen Schlafmodus versetzt werden. Vorzugsweise werden die ersten Sensoren an einem Ort oder in einem Bereich oder in einem Raum oder in einem Gebäudeteil oder in einem Gebäude in den Schlafmodus versetzt, bzw. setzen sich selbst in den Schlafmodus..

Generell werden vorzugsweise die ersten Sensoren 20, 20a, 20b, 20c einer Einheit in den Schlafmodus versetzt. Eine Einheit kann dadurch gebildet werden, dass sich die Sensoren 20a, 20b, 20c in einem gleichen Raum 12, 14 befinden oder dass die Sensoren 20a, 20b, 20c ein Teil eines Szenarios sind.

Nachdem in Verfahrensschritt 110 eine Vielzahl bzw. alle ersten Sensoren 20a, 20b, 20c in den Schlafmodus versetzt werden, wird das Verfahren entsprechend der vorhergehenden Beschreibung durchgeführt.

Das Verfahren weist zusätzlich den optionalen Verfahrensschritt 135 auf. In dem Verfahrensschritt 135 erfolgt die Auswahl eines ersten Sensors 20a, 20b, 20c der aufgeweckt werden soll. Die Auswahl des ersten Sensors 20a, 20b, 20c erfolgt insbesondere in Abhängigkeit von der durch den zweiten Sensor 30a erfassten Umgebungsgröße.

Gemäß einer Weiterbildung der Erfindung erfolgt die Auswahl des ersten Sensors, der aufgeweckt werden soll, zusätzlich oder alternativ von der Position des Sensors 20a, 20b, 20c. Die örtliche Position kann entweder manuell bei der Installation festgelegt werden oder über Signalstärken abgeleitet werden. Insbesondere wird der Sensor 20a, 20b, 20c ausgewählt, der am nächsten an dem zweiten Sensor 30 angeordnet ist. Gemäß einer Weiterbildung der Erfindung wird der erste Sensor 20a, 20b, 20c ausgewählt der in Abhängigkeit von der durch den zweiten Sensor erfassten Umgebungsgröße am nächsten an dem zweiten Sensor liegt. Oder die Auswahl erfolgt in Abhängigkeit der Position.

Auch kann die Art des Sensors, also welche Umgebungsgröße er erfasst, dazu beitragen, ob er ausgewählt wird oder ein anderer ausgewählt wird. Betritt beispielsweise eine Person den Raum würde der zweite Sensor 30a die Anwesenheit der Person melden. Es wird nun der Temperatursensor ausgewählt, der am nächsten an dem aktuellen Aufenthaltsort der Person, welche den Raum betreten hat sich befindet.

Im Verfahrensschritt 140 wird dann entsprechend der ausgewählte erste Sensor aufgeweckt.

Gemäß einer Weiterbildung können auch mehr als ein Sensor zum Aufwecken ausgewählt werden.

Gemäß einer Weiterbildung der Erfindung erfolgt das Erfassen der Umgebungsgröße durch den zweiten Sensor in Abhängigkeit von definierten Profilen, insbesondere Nutzungsprofilen (wie insbesondere Alarmanlage) und oder der Anwesenheit eines Bewohners. Beispielsweise können Bewegungssensor, welchen Räumen angeordnet sind, in einen Schlafmodus versetzt werden, wenn ein zentraler Bewegungssensor insbesondere Eingangsbereich des Gebäudes 5 keine Bewegung und damit keine Anwesenheit einer Person erfasst.

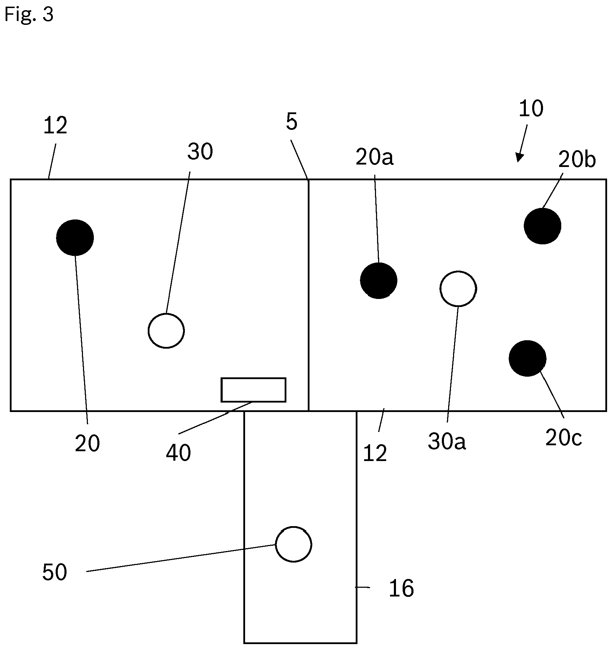

Gemäß einer Weiterbildung der Erfindung können die Sensoren in Gruppen eingeteilt sein. In Figur 3 ist beispielhaft der in Figur 1 gezeigte Aufbau ergänzt um den Raum 16 dargestellt. In dem Raum 16 ist zusätzlich der Sensor 50 angeordnet.

Ein Sensor kann beispielsweise in einer Gruppe einen ersten Sensor bilden und gleichzeitig in einer weiteren Gruppe einen zweiten Sensor bilden.

Beispielsweise bildet der Sensor 50, welcher als zentraler Bewegungssensor 50 ausgebildet ist und im Eingangsbereich 16 des Gebäudes 5 angeordnet ist, den zweiten Sensor einer ersten Gruppe. Die ersten Sensoren der ersten Gruppe werden durch die Sensoren 30, 30a in den einzelnen Räumen 12, 14 gebildet. Diese sind beispielhaft als Bewegungssensoren ausgebildet. Die Bewegungssensoren in den einzelnen Räumen sind gleichzeitig zweite Sensoren jeweils einer Gruppe. Die Sensoren 20, 30 und die Sensoren 20a, 20b, 20c, 30a bilden jeweils eine Gruppe. Das System kann somit durch kaskadiert werden.

Gemäß einer Weiterbildung der Erfindung ist das Verfahren lernfähig ausgebildet. Der Abruf der Umgebungsgröße durch den zweiten Sensor erfolgt in Abhängigkeit von Zeitpunkten in der Vergangenheit. Der Abruf der Umgebungsgröße durch den Sensor erfolgt in Abhängigkeiten von Zeitpunkten in der Vergangenheit. Insbesondere wenn in der Vergangenheit eine Regelmäßigkeit erkannt wird, kann die in der Gegenwart und Zukunft fortgesetzt werden. Gemäß einer Weiterbildung wird anhand der Abrufzeitpunkt in der Vergangenheit eine Regelmäßigkeit ermittelt und diese dann für die Gegenwart und Zukunft weiterverwendet.

Informiert sich beispielsweise ein Bewohner nach dem Betreten des Hauses immer über die Temperatur kann der zweite Sensor, wenn er eine Bewegung erkennt die ersten Sensoren aufwecken, damit diese die Umgangsgröße Temperatur abrufen.

Gemäß einer Weiterbildung der Erfindung kann Umgangsgröße, hier insbesondere die Temperatur, automatisch auf einem Display oder einem anderen Anzeigeelement angezeigt werden oder sie kann auf einem Audio Ausgabegerät ausgegeben werden. Das System lernt aus der Vergangenheit. Der Komfort für den Bewohner des Hauses ist erhöht.

Insbesondere wird unter seltene Erfassung von Umgebungsgröße verstanden, dass die Umgebungsgrößen nicht kontinuierlich oder derart regelmäßig erfasst werden, dass sie zu einem nennenswerten Energieverbrauch führen. Insbesondere wäre eine seltene Erfassung bei einem Temperatursensor eine tägliche Erfassung der Umgebungsgröße Temperatur.

Gemäß einer Weiterbildung kann das System anhand der Erfassung oder einer Abfrage durch einen Benutzer in der Vergangenheit lernen. Es kann beispielsweise auch bei dem zweiten Sensor Energie gespart werden. Aufgrund des seltenen Abfrageverhaltens kann gelernt werden, dass es ausreicht wenn ein Sensor entsprechend seltener die Umgebungsgröße erfassen muss und die restliche Zeit schlafen kann - und damit Energie spart. Beispielsweise muss ein Sensor nicht regelmässig einen Wert erfassen, wenn dieser vom Benutzer oder dem Smart Home System nur selten, insbesondere einmal am Tag/Sunde, abgefragt wird. Das System lernt aus dem Nutzungsverhalten des Bewohners.

## Patentansprüche

1. Verfahren (100) zum Betreiben von mindestens zwei Sensoren (20, 20a, 20b, 20c, 30, 30a, 50), die Teil eines Smart-Home-Systems (10) sind, aufweisend die Schritte:
• Versetzen (110) des ersten Sensors (20, 20a, 20b, 20c) in einen Schlafmodus,
• Erfassen (120) einer Umgebungsgröße, welche die Umgebung repräsentiert, durch einen zweiten Sensor (30, 30a, 50),
• Aufwecken (140) des ersten Sensors (20, 20a, 20b, 20c) aus dem Schlafmodus in Abhängigkeit von der durch den zweiten Sensor (30, 30a, 50), erfassten Umgebungsgröße und Erfassen einer Umgebungsgröße, welche die Umgebung repräsentiert, durch den ersten Sensor (20, 20a, 20b, 20c),
• Auswerten (130, 155, 160) zumindest einer der erfassten Umgebungsgrößen.

2. Verfahren (100) nach dem vorhergehenden Anspruch, **dadurch gekennzeichnet, dass** die Umgebung durch physikalische und/oder chemische Größen, wie insbesondere Temperatur, Luftfeuchtigkeit, Helligkeit, Schadstoffgehalt, Bewegung, Luftbewegung, Luftqualität, Strömungen repräsentiert wird, wobei insbesondere aus der Umgebungsgröße abgeleitet werden kann, dass zumindest ein Lebewesen anwesend oder abwesend ist.

3. Verfahren (100) nach einem der vorhergehenden Ansprüche, **dadurch gekennzeichnet, dass** ein Sensor (20, 20a, 20b, 20c) im Schlafmodus selten oder gar nicht eine Umgebungsgröße erfasst, welche die Umgebung repräsentiert, und/oder selten oder gar nicht Nachrichten, insbesondere erfasste Umgebungsgröße oder ein aus mindestens einer erfassten Umgebungsgröße abgeleitetes Signal, überträgt.

4. Verfahren (100) nach einem der vorhergehenden Ansprüche, **dadurch gekennzeichnet, dass** der zweite Sensor (30, 30a, 50) in regelmäßigen Zeitabständen, insbesondere kontinuierlich, die Umgebungsgröße erfasst.

5. Verfahren nach einem der vorhergehenden Ansprüche, **dadurch gekennzeichnet, dass** die durch den ersten Sensor (20, 20a, 20b, 20c) und/oder zweiten Sensor (30, 30a, 50) erfasste Umgebungsgröße bei einer Abweichung größer eines relativen Schwellenwerts und/oder beim Überschreiten eines absoluten Schwellenwerts und/oder beim Erreichen eines Bereichs übertragen wird.

6. Verfahren (100) nach einem der vorhergehenden Ansprüche, **dadurch gekennzeichnet, dass** mehr als ein erster Sensor (20, 20a, 20b, 20c) ausgebildet ist, und dass das Verfahren folgenden Schritte aufweist:
• Versetzen (110) der ersten Sensoren (20, 20a, 20b, 20c) in einen Schlafmodus,
• Auswahl (135) eines ersten Sensors (20, 20a, 20b, 20c), und Aufwecken des ausgewählten ersten Sensors (20, 20a, 20b, 20c), in Abhängigkeit von der durch den zweiten Sensor (30, 30a, 50) erfassten Umgebungsgröße.

7. Verfahren (100) nach einem der vorhergehenden Ansprüche, **dadurch gekennzeichnet, dass** mehr als ein erster Sensor (20, 20a, 20b, 20c) ausgebildet ist, und dass das Verfahren (100) folgenden Schritte aufweist:
• Versetzen (110) der ersten Sensoren in einen Schlafmodus,
• Auswahl (135) eines ersten Sensors (20, 20a, 20b, 20c), und aufwecken des ausgewählten ersten Sensors (20, 20a, 20b, 20c), in Abhängigkeit von der Position des ersten Sensors (20, 20a, 20b, 20c) und in Abhängigkeit von der Position des zweiten Sensors (30, 30a, 50), wobei insbesondere ein erster Sensor (20, 20a, 20b, 20c) ausgewählt wird, der am nächsten an dem zweiten Sensor (30, 30a, 50) angeordnet ist.

8. Verfahren (100) nach einem der vorhergehenden Ansprüche, **gekennzeichnet durch** die Schritte:
• Versetzen (157) des ersten Sensors (20, 20a, 20b, 20c) in den Schlafmodus nachdem dieser die erfasste Umgebungsgröße und/oder davon abgeleitet Signal übertragen hat.

9. Verfahren (100) nach einem der vorhergehenden Ansprüche, **gekennzeichnet durch** die Schritte:
• Erfassen der Umgebungsgröße durch den zweiten Sensor (30, 30a, 50) in Abhängigkeit von definierten Profilen, insbesondere Nutzungsprofilen und/oder der Anwesenheit eines Bewohners.

10. Verfahren (100) nach einem der vorhergehenden Ansprüche, **gekennzeichnet durch** die Schritte:
• Bestimmen des Zeitpunkts, an welchem der zweite Sensor (30, 30a, 50) eine Umgebungsgröße erfasst, in Abhängigkeit von Zeitpunkten in der Vergangenheit, an welchen der zweite Sensor (30, 30a, 50) bisher die Umgebungsgröße erfasst hat und/oder ein Abruf der Umgebungsgröße durchgeführt wurde.
